# EUROPÄISCHE PATENTANMELDUNG

(11) **EP 0 890 312 A1**
(43) Veröffentlichungstag der Anmeldung: **13.01.1999**
(21) Anmeldenummer: 98112147.8
(22) Anmeldetag: 01.07.1998
(51) Int. Cl.: A21C 3/04, A21C 11/16

(54) **Vorrichtung zum Austragen von pastösen Massen, z.B. Backteig**

(30) Priorität: 02.07.1997 DE 29711518 U
(71) Anmelder: Krumbein, Wolfgang, 99891 Tabarz (DE)
(72) Erfinder: Krumbein, Wolfgang, 99891 Tabarz (DE)
(74) Vertreter: WALTHER, WALTHER & HINZ Patentanwälte

(57) **Zusammenfassung**

Vorrichtung zum Austragen von pastösen Massen, z. B. Backteig, aus einem Behälter mit zwei gegenläufig antreibbaren Rotationskörpern, wobei die Rotationskörper auf ihrem Umfang zahnartige Elemente aufweisen, wodurch der Eingriff der zahnartigen Elemente (30, 40) des einen Rotationskörpers (11, 12) mit den zahnartigen Elementen (30, 40) des anderen Rotationskörpers (11, 12) berührungsfrei erfolgt.

## Beschreibung

Die Erfindung betrifft eine Vorrichtung zum Austragen von pastösen Massen, z. B. Backteig aus einem Behälter mit zwei gegenläufig antreibbaren Rotationskörpern, wobei die Rotationskörper auf ihrem Umfang zahnartige Elemente aufweisen.

Eine Vorrichtung der eingangs genannten Art ist bekannt. Hierbei sind Zahnwalzen vorgesehen, die miteinander im Eingriff stehen und den Backteig aus einem über den Zahnwalzen befindlichen Behälter auf eine darunterliegende Unterlage austragen. Eine derartige Vorrichtung dient im Wesentlichen zum dosierten Austragen von Backteig.

Es ist nun bekannt, daß Backteig, bevor er verarbeitet wird, luftig geschlagen wird. Das heißt, daß der Backteig nach Möglichkeit viele Luftblasen aufweisen soll. Hierdurch wird zum einen der Gärprozeß positiv beeinflußt und zum anderen ergibt sich ein Backgut, das sich für den Käufer als luftig und leicht darstellt.

Mit der bekannten Vorrichtung zum Austragen von Backteig wird der Backteig während des Austragvorganges gequetscht. Das heißt, daß die im Teig vorhandenen feinen Luftblasen zerstört werden. Die Folge hiervon ist, daß in der nachgeschalteten Gärstufe Probleme beim Gehen des Teiges auftreten. Das heißt, der Gärvorgang dauert länger bzw. es kann sogar sein, daß dem Teig ein höherer Anteil an Treibmittel zugegeben werden muß, um den Teig eben zu veranlassen, nach dem Austragvorgang nochmals aufzugehen.

Der Erfindung liegt daher die Aufgabe zugrunde, eine Vorrichtung zum Austragen von pastösen Massen, z. B. Backteig, bereitzustellen, durch die die pastöse Masse, insbesondere Kuchenteig, nicht gequetscht wird.

Die Aufgabe wird erfindungsgemäß dadurch gelöst, daß der Eingriff der zahnartigen Elemente des einen Rotationskörpers mit den zahnartigen Elementen des anderen Rotationskörpers berührungsfrei erfolgt. Das heißt, daß die zahnartigen Elemente nicht miteinander kämmen, sondern zwischen den Zähnen und Zahnlücken und hier insbesondere im Bereich der Zahnflanken ein Abstand besteht, der insbesondere im Zahngrund nur sehr gering sein kann. Hieraus wird deutlich, daß die zahnartigen Elemente eine geringere Querschnittsfläche als die Zahnlücken aufweisen. Somit bleibt ein mit der erfindungsgemäßen Vorrichtung ausgetragener Teig in seiner Konsistenz im Wesentlichen erhalten. Ein weiterer Vorteil besteht darin, daß grobkörniges Backgut, also Teig mit Kirschen, Kokosraspeln, Rosinen etc., ebenfalls gut, d. h. ohne Zerstörung dieser Bestandteile verarbeitet werden kann.

Um eine synchrone Drehung der Rotationskörper zueinander zu erreichen, sind die Rotationskörper vorteilhaft miteinander kuppelbar, beispielsweise durch endseitig angeordnete Zahnräder, die miteinander im Eingriff stehen.

Um große Mengen an Teig austragen zu können, ist nach einem weiteren Vorteil als Merkmal der Erfindung vorgesehen, daß die Rotationskörper als Walzen ausgebildet sind. Die Walzen sind hierbei im Querschnitt sternartig ausgebildet, wobei vorteilhaft die Walzen auf ihrem Umfang verteilt, vier zahnartige Elemente aufweisen.

Nach einer vorteilhaften Ausführungsform ist vorgesehen, daß die zahnartigen Elemente einer Walze parallel zueinander verlaufende Zahnflanken zeigen, wobei der Zahnkopf und korrespondierend hierzu der Zahngrund ebenfalls kreisbogenförmig ausgebildet ist.

Eine andere Ausführungsform zeichnet sich dadurch aus, daß das zahnartige Element winklig aufeinander zu verlaufende Zahnflanken aufweist. Bei beiden Ausführungsformen ist allerdings sichergestellt, wie bereits oben erläutert, daß die Querschnittsfläche der einzelnen zahnartigen Elemente geringer ist als die freie Querschnittsfläche der Zahnlücken, das heißt dem Raum zwischen den einzelnen Zähnen.

Anhand der Zeichnungen wird die erfindung nachstehend beispielshaft näher erläutert.
- Figur 1: zeigt die Vorrichtung in schematischer räumlicher Darstellung;
- Figur 2: zeigt einen Schnitt durch die Walzenanordnung;
- Figur 3: zeigt die Walzenform einer ersten Ausführungsform;
- Figur 4: zeigt die Walzenform einer zweiten Ausführungsform.
- Fig. 5 und 6: zeigen jeweils zwei unterschiedliche Walzenformen als Anordnung in der Vorrichtung.

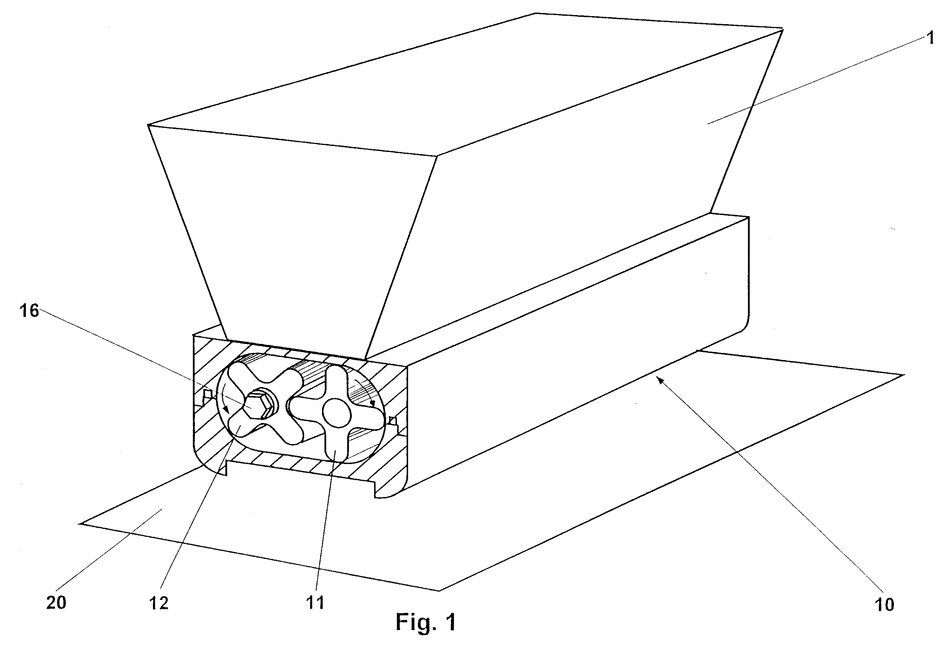

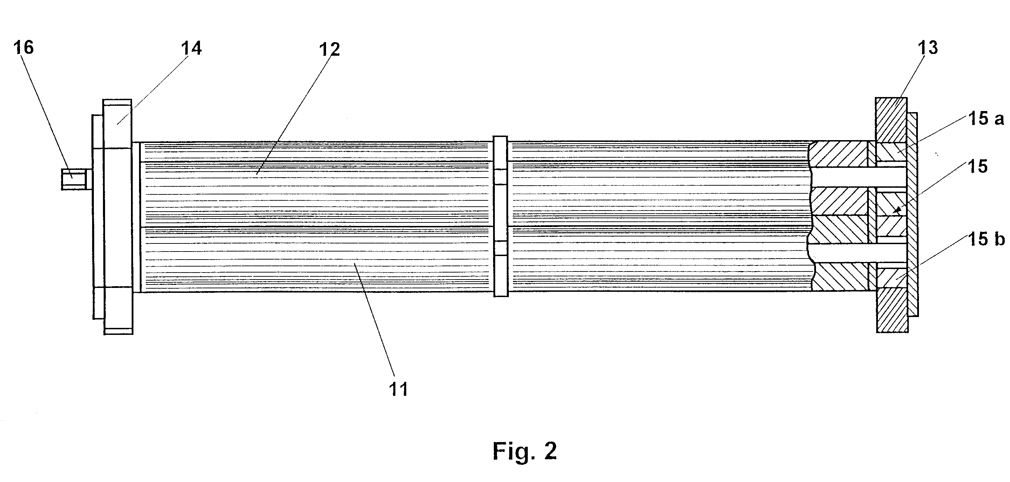

Gemäß Figur 1 erfolgt durch den Trichter 1 die Zuführung des Teiges zu der insgesamt mit 10 bezeichneten Austragvorrichtung. Die mit 10 bezeichnete Austragvorrichtung besteht aus zwei gegenläufig rotierenden Walzen 11 und 12. Durch diese Walzen 11 und 12 wird der Teig, der sich in dem Behälter 1 befindet, auf die Unterlage 20 gefördert. Die Anordnung der Walzen des Walzenpaares 10 ergibt sich im Übrigen aus Figur 2; so ist aus Figur 2 deutlich erkennbar, daß die beiden Walzen 11 und 12 endseitig jeweils in einem Gehäuse 13, 14 gelagert sind. Hierbei ist in dem Gehäuse 13 ein Zahnradpaar 15 vorgesehen, wobei die beiden Zahnräder 15a und 15b des Zahnradpaares 15 stirnseitig an den Walzen 11, 12 befestigt sind und miteinander in Eingriff stehen. Darüber hinaus zeigt die eine Walze 12 eine antreibbare Welle 16, wobei bei Drehung der Walze 12 durch die antreibbare Welle 16 unmittelbar aufgrund des Zahnradpaares 15 auch die Walze 11 synchron mitgedreht wird. Im Gehäuse 14 sind die beiden Walzen 11 und 12 jeweils endseitig drehbar gelagert.

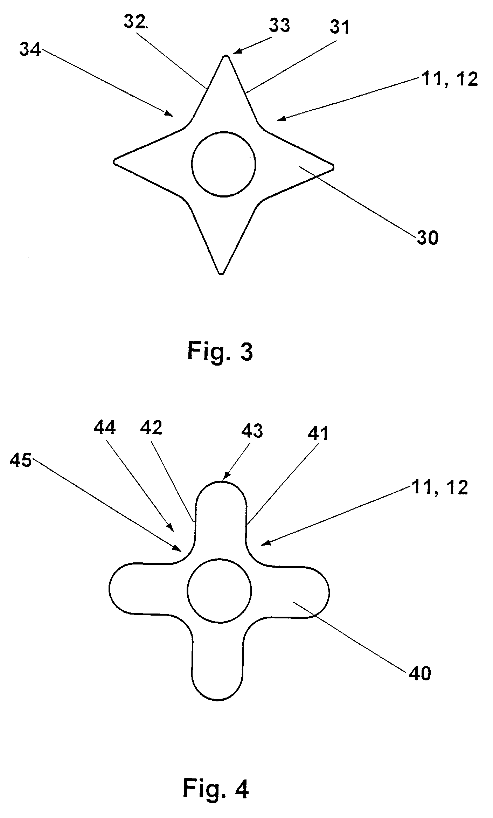

Aus den Figuren 3 und 4 sind zwei Walzen mit unterschiedlicher Querschnittsform erkennbar. Bei der Ausführungsform gemäß Figur 3 zeigen die zahnartigen Elemente 30 schräg, also beinahe konisch zulaufende Zahnflanken 31, 32. Endseitig ist das zahnartige Elemente gekappt, so daß sich ein flacher Zahnkopf 33 ergibt. Aus Figur 3 ist ebenfalls deutlich erkennbar, daß die Zahnlücke 34, also der Raum zwischen zwei zahnartigen Elementen 30, im Querschnitt wesentlich größer ist, als das zahnartige Elemente selbst. Insbesondere hierdurch wird erreicht, wie bereits an anderer Stelle erläutert, daß der Teig in seiner Konsistenz erhalten bleibt, mithin im Gegensatz zum Stand der Technik nicht gequetscht wird.

Bei der Ausführungsform gemäß Figur 4 zeigt das zahnartige Element 40 parallel zueinander verlaufende Zahnflanken 41, 42, wobei der Kopf 43 des zahnartigen Elementes 40 kreisbogenförmig ausgebildet ist. Korrespondierend ist hierzu ist auch der Zahngrund 45 der Zahnlücke 44 kreisbogenförmig gehalten. Wesentlich ist auch hier, daß die Querschnittsfläche des zahnartigen Elementes 40 kleiner ist, als die freie Fläche, also die Zahnlücke 44 zwischen zwei zahnartigen Elementen 40.

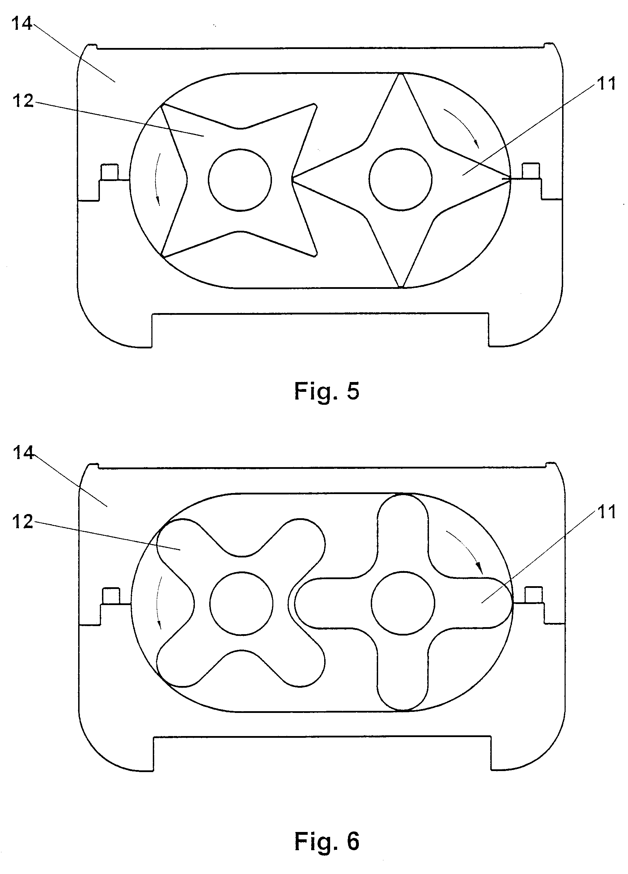

In den Figuren 5 und 6 ist die Anordnung von unterschiedlichen Walzenpaaren in der Austragvorrichtung dargestellt. So ist aus dieser Darstellung insbesondere erkennbar, daß aufgrund der unterschiedlichen Größe der Zähne und der jeweiligen Zahnzwischenräume auch grobkörniges Backgut ohne Quetschen verarbeitet werden kann.

## Patentansprüche

1. Vorrichtung zum Austragen von pastösen Massen, z. B. Backteig, aus einem Behälter mit zwei gegenläufig antreibbaren Rotationskörpern, wobei die Rotationskörper auf ihrem Umfang zahnartige Elemente aufweisen,
**dadurch gekennzeichnet**,
daß der Eingriff der zahnartigen Elemente (30, 40) des einen Rotationskörpers (11, 12) mit den zahnartigen Elementen (30, 40) des anderen Rotationskörpers (11, 12) berührungsfrei erfolgt.

2. Vorrichtung nach Anspruch 1,
**dadurch gekennzeichnet**,
daß die Rotationskörper (11, 12) miteinander kuppelbar sind.

3. Vorrichtung nach Anspruch 2,
**dadurch gekennzeichnet**,
daß zur Kupplung die Rotationskörper (11, 12) endseitig miteinander kämmende Zahnräder (15a, 15b) vorgesehen sind.

4. Vorrichtung nach einem der voranstehenden Ansprüche,
**dadurch gekennzeichnet**,
daß der Rotationskörper (11, 12) als Walze ausgebildet ist.

5. Vorrichtung nach Anspruch 4,
**dadurch gekennzeichnet**,
daß die Walze (11, 12) im Querschnitt sternartig ausgebildet ist.

6. Vorrichtung nach Anspruch 4 oder 5,
**dadurch gekennzeichnet**,
daß die Walze (11, 12) auf ihrem Umfang verteilt, vier zahnartige Elemente (30, 40) aufweist.

7. Vorrichtung nach einem der voranstehenden Ansprüche,
**dadurch gekennzeichnet**,
daß das zahnartige Element (30, 40) eine geringere Querschnittsfläche als die Zahnlücke (34, 44) aufweist.

8. Vorrichtung nach einem der voranstehenden Ansprüche,
**dadurch gekennzeichnet**,
daß das zahnartige Element (40) parallel zueinander verlaufende Zahnflanken (41, 42) aufweist, wobei der Zahnkopf (43) kreisbogenförmig und korrespondierend hierzu der Zahngrund (45) ebenfalls kreisbogenförmig ausgebildet ist.

9. Vorrichtung nach einem der voranstehenden Ansprüche,
**dadurch gekennzeichnet**,
daß das zahnartige Element (30) winklig aufeinander zulaufende Zahnflanken (31, 32) aufweist.
